# EUROPÄISCHE PATENTSCHRIFT

(11) **EP 0 512 405 B1**
(45) Veröffentlichungstag und Bekanntmachung des Hinweises auf die Patenterteilung: **14.09.1994**
(21) Anmeldenummer: 92107356.5
(22) Anmeldetag: 30.04.1992
(51) Int. Cl.: F16D 33/12

(54) **Hydrodynamische Kupplung**
Hydrodynamic coupling
Accouplement hydrodynamique

(30) Priorität: 10.05.1991 DE 4115349
(43) Veröffentlichungstag der Anmeldung: 11.11.1992
(73) Patentinhaber: VOITH TURBO GMBH & CO. KG, D-74564 Crailsheim (DE)
(72) Erfinder: Liebe, Jürgen, W-7170 Schwäbisch Hall (DE); Hoffeld, Harald, W-7180 Crailsheim (DE)
(74) Vertreter: Weitzel, Wolfgang, Dr.-Ing.

(56) Entgegenhaltungen:
- DE-A- 1 425 394
- FR-A- 2 317 557
- FR-A- 2 535 421
- GB-A- 697 408
- GB-A- 994 256
- US-A- 2 392 120

## Beschreibung

Die Erfindung betrifft eine hydrodynamische Kupplung mit den im Oberbegriff des Anspruches 1 angegebenen Merkmalen. Eine solche Kupplung dient zur Kraftübertragung von einem Antriebsmotor zu einer Arbeitsmaschine. Mit der hydrodynamischen Kupplung wird das Anlaufen des Antriebsmotors aus dem Stillstand erleichtert. Während der Anlauf-Phase soll das von der hydrodynamischen Kupplung übertragene Drehmoment möglichst klein sein. Erreicht dann der Antriebsmotor seine Nenndrehzahl, so soll das von der Kupplung übertragene Drehmoment bis zu einem Wert ansteigen, der das sogenannte Losbrechmoment übersteigt, wonach das Kupplungs-Drehmoment auf das normale Lastmoment zurückfällt.

Die Erfindung betrifft ausschließlich hydrodynamische Kupplungen derjenigen Bauart, welche mit einer gleichbleibenden Menge an Arbeitsflüssigkeit betrieben werden. Mit anderen Worten: Im Stillstand der Kupplung wird ihr Innenraum mit einer bestimmten Arbeitsflüssigkeitsmenge gefüllt, die während des Betriebes unverändert bleibt. (Eine andere Gattung hydrodynamischer Kupplungen ist diejenige, bei der ein äußerer Flüssigkeits-Kreislauf vorhanden ist, der es gestattet, den Füllungsgrad der Kupplung während des Betriebes zu verändern).

Die Erfindung geht aus von einer hydrodynamischen Kupplung, die aus DE-PS 14 25 394 (= GB-PS 994 256, Akte G 2638) bekannt ist. Hydrodynamische Kupplungen dieser Bauart haben sich in der Praxis sehr gut bewährt. Schwierigkeit bereitet jedoch ihre Anwendung dann, wenn der Motor, mit dem die hydrodynamische Kupplung zusammenarbeiten muß, mit unterschiedlichen Nenndrehzahlen betrieben werden kann. Dies ist beispielsweise der Fall bei einem sogenannten polumschaltbaren Elektromotor, der in der Regel eine untere Nenndrehzahl und eine alternativ hierzu einschaltbare obere Nenndrehzahl aufweist. Mehr als zwei alternativ einschaltbare Nenndrehzahlen sind ebenfalls denkbar. Das Problem kann auch auftreten, wenn die hydrodynamische Kupplung mit einer Brennkraftmaschine zusammen arbeiten muß. In allen diesen Fällen hat die bekannte Kupplung den Nachteil, daß die Größe des Primärdrehzahl-Bereiches, in dem das Kupplungs-Drehmoment sehr klein ist (um das Anlaufen des Antriebsmotors zu erleichtern), stets nur an eine einzige Nenndrehzahl anpaßbar ist. Wünscht man die gleiche Kupplung für eine andere Nenndrehzahl einzusetzen, so müßte zunächst ein erneutes Anpassen der Kupplung an die andere Nenndrehzahl stattfinden. Dies ist nur im Stillstand möglich, beispielsweise durch Ändern des Füllungsgrades und/oder Ändern des Schaltpunktes der in der Kupplung vorhandenen Ventile.

Der Erfindung liegt die Aufgabe zugrunde, die bekannte hydrodynamische Kupplung dahingehend zu verbessern, daß sie während des Betriebes und ohne Eingriff von außen für den Betrieb mit unterschiedlichen Nenndrehzahlen geeignet ist. Mit anderen Worten: Gleichgültig ob der Motor zur unteren oder zur oberen (oder zu einer dritten) Nenndrehzahl hochläuft, soll das Kupplungs-Drehmoment stets ausreichend niedrig bleiben. Trotzdem soll dann das Kupplungs-Drehmoment beim Erreichen der jeweils eingestellten Nenndrehzahl in der gewünschten Weise ansteigen, beispielsweise das Losbrechmoment übersteigen.

Diese Aufgabe wird durch die kennzeichnenden Merkmale des Anspruches 1 gelöst. Dadurch daß im Bereich unterhalb der unteren Nenndrehzahl die den Stauraum mit der Verzögerungskammer verbindende Ventilanordnung stets geschlossen ist, wird das Kupplungs-Drehmoment nur dadurch niedrig gehalten, daß sich ein Teil der Arbeitsflüssigkeit vom vorangehenden Ruhezustand her noch in der Verzögerungskammer befindet und durch die Drosselstelle hindurch nur allmählich in den Arbeitsraum übertritt. Außerdem nimmt in dieser Anfahrphase der Stauraum, wie bekannt, vorübergehend einen Teil der Arbeitsflüssigkeit auf. Bleibt nun die Primärdrehzahl bei der unteren Nenndrehzahl konstant, so füllt sich schließlich der Arbeitsraum zumindest soweit, daß das Kupplungs-Drehmoment auf den hier gewünschten Höchstwert, z.B. das Losbrechmoment ansteigen kann, wonach sich ein stationärer Zustand bei der unteren Nenndrehzahl einstellt. Die genannte Ventilanordnung bleibt also dauernd geschlossen.

Ist dagegen der Antriebsmotor auf die obere Nenndrehzahl eingestellt, dann überschreitet die Primärdrehzahl beim Anlaufen rasch die untere Nenndrehzahl in Richtung zur oberen Nenndrehzahl. In diesem Fall öffnet sich die genannte Ventilanordnung unmittelbar beim oder kurz nach dem Überschreiten der unteren Nenndrehzahl. Dies hat zur Folge, daß die im Stauraum befindliche Arbeitsflüssigkeit in die Verzögerungskammer entweichen kann, so daß weitere Arbeitsflüssigkeit dem Arbeitsraum entnommen wird. Daraus resultiert, daß das Kupplungs-Drehmoment auch oberhalb der unteren Nenndrehzahl zunächst einen relativ niedrigen Wert beibehält. Dies bleibt so bis die obere Nenndrehzahl erreicht wird oder bis kurz vor dem Erreichen der oberen Nenndrehzahl. Dann nämlich schließt sich die genannte Ventilanordnung wieder, so daß der Füllungsgrad im Arbeitsraum wieder zunimmt und das Kupplungs-Drehmoment den gewünschten Anstieg erfährt.

Die beschriebenen Vorgänge erfolgen alle vollkommen selbsttägig, ohne daß mit dem Umschalten des Antriebsmotors auf die andere Nenndrehzahl irgendeine Änderung an der hydrodynamischen Kupplung vorgenommen werden müßte.

Das in Anspruch 1 enthaltene Drehschieber-Ventil - z.B. gemäß DE-1 425 394 - ist zwar grundsätzlich bekannt. Der Einsatz in einer Ventilanordnung wie in Anspruch 1 ist jedoch nicht bekannt und auch nicht naheliegend.

Alle in dieser Veröffentlichung beschriebenen Merkmale sind auch bei der erfindungsgemäßen Kupplung anwendbar, insbesondere das Drehschieber-Ventil mit Schnappeffekt. Bezüglich der Einzelheiten wird ausdrücklich auf die DE-PS 14 25 394 hingewiesen.

Weitere vorteilhafte Ausgestaltungen der Erfindung sind in den Ansprüchen 5 bis 8 angegeben.

Ein zusätzlicher Effekt kann erzielt werden mit Hilfe des im Anspruch 9 beschriebenen Kammer-Auslaßventils. Mit Hilfe dieses Ventils, das stets oberhalb der unteren Nenndrehzahl geschlossen ist und mit Hilfe des ohnehin vorhandenen, parallel zum Kammer-Auslaßventil vorgesehenen Drosselkanals ist es möglich, die Dauer der Anlauf-Phase beim Betrieb mit der unteren Nenndrehzahl unabhängig einzustellen von der Dauer der Anlauf-Phase beim Betrieb mit der oberen Nenndrehzahl.

Weitere Ausgestaltungen und zwei Ausführungsbeispiele der Erfindung werden nachfolgend anhand der Zeichnung erläutert.
- Die Fig. 1: ist ein Längsschnitt durch eine hydrodynamische Kupplung mit einer ersten Ausführungsform einer Ventilanordnung gemäß dem Stand der Technik.
- Die Fig. 2: ist ein Teillängsschnitt (in vergrößertem Maßstab) durch eine von der Fig. 1 abweichende Ventilanordnung gemäß der Erfindung.

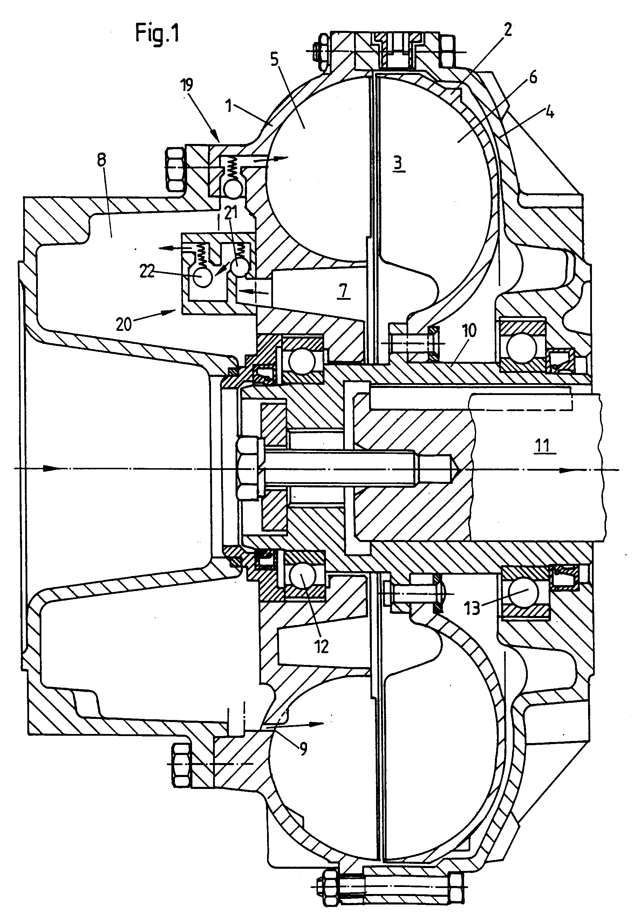

Die in der Fig. 1 dargestellte hydrodynamische Kupplung hat ein Primärschaufelrad 1 mit Schaufeln 5 und ein Sekundärschaufelrad 2 mit Schaufeln 6. Die beiden Schaufelräder 1 und 2 bilden miteinander einen torusförmigen Arbeitsraum 3. Am Primärschaufelrad 1 ist eine das Sekundärschafelrad 2 umhüllende Schale 4 befestigt. Das Sekundärschaufelrad 2 ist an einer Nabe 10 befestigt; diese ist drehfest mit einer Abtriebswelle 11 verbunden. Primärschaufelrad 1 und Schale 4 sind mit Hilfe von Wälzlagern 12, 13 auf der Nabe 10 gelagert.

Im radial inneren Bereich des Primärschaufelrades 1 befindet sich in bekannter Weise ein schaufelfreier Stauraum 7, der zum Arbeitsraum 3 hin offen ist. Mit dem Primärschaufelrad 1 rotiert eine im wesentlichen ringförmige Verzögerungskammer 8, deren Rauminhalt so bemessen ist, daß sie zumindest den überwiegenden Teil der Arbeitsflüssigkeit aufnehmen kann, mit der bei normaler Kraftübertragung der Arbeitsraum 3 gefüllt ist. Über die Wände der Verzögerungskammer 8 wird das Primärschaufelrad 1 an einen nicht dargestellten Antriebsmotor gekoppelt.

Bei Stillstand der Kupplung sammelt sich die Arbeitsflüssigkeit im unteren Bereich der Innenräume, also teilweise im Arbeitsraum 3 teilweise im Stauraum 7 und teilweise in der Verzögerungskammer 8. Wenn das Primärschaufelrad 1 beschleunigt wird, so ist also der Arbeitsraum 3 nur teilweise mit Arbeitsflüssigkeit gefüllt, so daß das Kupplungs-Drehmoment noch relativ niedrig ist. Dies erleichtert das Hochlaufen des Antriebsmotors. Gleichzeitig strömt jedoch der in der Verzögerungskammer 8 befindliche Teil der Arbeitsflüssigkeit allmählich über einen Drosselkanal 9 und über ein zunächst offenes Kammer-Auslaßventil 19 (das weiter unten im einzeln beschrieben wird) in den Arbeitsraum 3, so daß der Füllungsgrad des Arbeitsraumes allmählich zunimmt.

Der Stauraum 7 ist mit der Verzögerungskammer 8 über eine insgesamt mit 20 bezeichnete Ventilanordnung verbunden, die zwei von der Arbeitsflüssigkeit nacheinander durchströmte Ventile 21, 22 umfaßt. Dargestellt sind in Fig. 1 durch Fliehkraft betätigte Kugelventile. Gemäß Fig. 1 ist ein erstes Ventil 21 derart ausgebildet, daß es durch Federkraft (entgegen der Fliehkraft) geschlossen wird und daß es sich öffnet wenn die Fliehkraft die Federkraft übersteigt. Bei einem zweiten Ventil 22 ist es umgekehrt; dieses wird durch Federkraft (entgegen der Fliehkraft) offengehalten; es schließt sich, wenn die Fliehkraft die Federkraft überwiegt. Beim dargestellten Ausführungsbeispiel strömt, wenn beide Ventile 21 und 22 geöffnet sind, die Arbeitsflüssigkeit aus dem Stauraum 7 zunächst durch das erste Ventil 21 und dann durch das zweite Ventil 22 in die Verzögerungskammer 8. Die Reihenfolge der beiden Ventile 21 und 22 könnte jedoch auch umgekehrt sein.

Die beiden Ventile 21 und 22 sind abgestimmt für die Verwendung mit einem Motor, der mit zwei unterschiedlichen Nenndrehzahlen n1 oder n2 betrieben werden kann. Beispielsweise handelt es sich um einen polumschaltbaren Elektromotor.

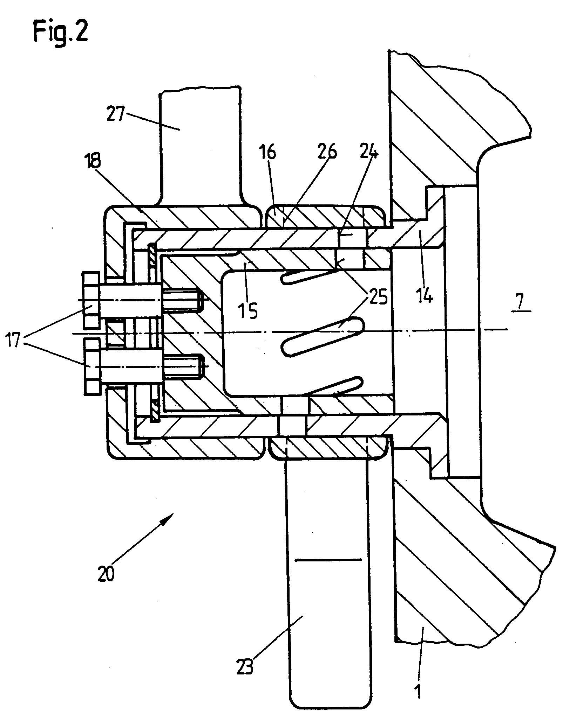

Die in Fig. 2 dargestellte Drehschieber-Ventilanordnung umfaßt einen im Primärschaufelrad 1 starr befestigten und zum Stauraum 7 hin offenen Hohlzylinder 14, einen ersten hülsenförmigen drehbaren Ventilkörper 15 und einen zweiten, ebenfalls hülsenförmigen und drehbaren Ventilkörper 16. Der erste Ventilkörper 15 ist auf der Innenseite des Hohlzylinders 14 drehbar gelagert, der zweite Ventilkörper 16 dagegen auf der Außenseite. Beide Ventilkörper 15 und 16 und der Hohlzylinder 14 haben Öffnungen 25 bzw. 26 bzw. 24. Wenn sich diese drei Öffnungen einander überdecken, was bei einer bestimmten Stellung der Ventilkörper 15 und 16 möglich ist, dann kann Arbeitsflüssigkeit radial durch die Öffnungen 25, 24, 26 hindurchströmen.

Schematisch angedeutet ist ein Fliehgewichtskörper 23, der unmittelbar an den auf der Außenseite des Hohlzylinders 14 gelagerten Ventilkörpers 16 angeformt ist. Der auf der Innenseite des Hohlzylinders 14 gelagerte Ventilkörper 15 ist beispielsweise mittels Schrauben 17 mit einer drehbaren Nabe 18 verbunden, an die ein Fliehgewichtskörper 27 angeformt ist. Die an den Fliehgewichtskörpers 23 und 24 angreifenden Federn sind in der Zeichnung weggelassen. Die Nabe 18 ist unmittelbar neben dem Ventilkörper 16 auf der Außenseite des Hohlzylinders 14 drehbar gelagert. Wie die Fig. 2 zeigt, ist die Verbindung der Nabe 18 mit dem Ventilkörper 15 an den Schrauben 17 mit einem relativ großen radialen Spiel versehen; die Verbindung ist also radialkraftfrei. Mit dieser Konstruktion ist sichergestellt, daß der Drehbewegung der beiden Ventilkörper nur geringe Reibmomente entgegenstehen; die Hysterese der Drehschieberventile ist somit gering. Vor allem sind nur geringe Reibwertschwankungen zu erwarten, so daß die Schaltpunkte gut reproduzierbar sind.

Abweichend von Fig. 1 wird man, wie üblich, mehrere Ventilanordnungen 20, in gleichmäßiger Verteilung um die Kupplungsdrehachse, vorsehen, so daß eine Unwucht vermieden wird.

## Patentansprüche

1. Hydrodynamische Kupplung mit den folgenden Merkmalen:
a) ein Primärschaufelrad (1) und ein Sekundärschaufelrad (2) bilden miteinander einen mit Arbeitsflüssigkeit füllbaren torusförmigen Arbeitsraum (3);
b) radial innerhalb des Arbeitsraumes (3) befindet sich ein zur vorübergehenden Aufnahme von Arbeitsflüssigkeit geeigneter schaufelfreier Stauraum (7), der zum Arbeitsraum hin offen ist;
c) mit dem Primärschaufelrad (1) rotieren die Wände einer Verzögerungskammer (8), die ebenfalls zum vorübergehenden Speichern von Arbeitsflüssigkeit geeignet ist und die über wenigstens einen, eine Drosselstelle bildenden Kanal (9) mit dem Arbeitsraum (3) verbunden ist;
d) der Stauraum (7) ist mit der Verzögerungskammer (8) über wenigstens eine Ventilanordnung (20) verbunden, die in Abhängigkeit von der Primärdrehzahl steuerbar ist;
e) dadurch gekennzeichnet, daß - zwecks Verwendung der hydrodynamischen Kupplung in Kombination mit einem Motor, der eine untere Nenndrehzahl (n1) und eine alternativ hierzu einschaltbare obere Nenndrehzahl (n2) aufweist (z.B. polumschaltbarer Elektromotor) - die Ventilanordnung (20) derart steuerbar ist, daß sie im wesentlichen nur dann geöffnet ist, wenn die Primärdrehzahl in einem Bereich zwischen den Nenndrehzahlen (n1, n2) liegt, und daß die Ventilanordnung ein Drehschieberventil umfaßt.

2. Hydrodynamische Kupplung nach Anspruch 1, gekennzeichnet durch die folgenden Merkmale:
a) die Ventilanordnung (20) umfaßt ein erstes Ventil (21) und ein (bezüglich der Strömungsrichtung) vor oder hinter diesem befindliches zweites Ventil (22);
b) das erste Ventil (21) ist geschlossen, wenn die Primärdrehzahl kleiner und geöffnet, wenn die Primärdrehzahl größer als die untere Nenndrehzahl (n1) ist;
c) das zweite Ventil (22) ist geöffnet, wenn die Primärdrehzahl kleiner und geschlossen, wenn die Primärdrehzahl größer ist als die obere Nenndrehzahl (n2).

3. Hydrodynamische Kupplung nach Anspruch 1 oder 2, dadurch gekennzeichnet, daß jedes der Ventile (21, 22) der Ventilanordnung (20) in an sich bekannter Weise mittels eines gegen eine Feder wirkenden Fliehgewichtskörpers steuerbar ist.

4. Hydrodynamische Kupplung nach Anspruch 3, dadurch gekennzeichnet, daß jedes der Ventile einen hülsenförmigen und radial durchströmte Öffnungen (25, 26) aufweisenden drehbaren Ventilkörper (15, 16) aufweist.

5. Hydrodynamische Kupplung nach Anspruch 4, dadurch gekennzeichnet, daß der drehbare Ventilkörper (16) des einen Ventils auf der Außenseite und der drehbare Ventilkörper (15) des anderen Ventils auf der Innenseite eines relativ zu den Ventilkörpern stationären und ebenfalls radial durchströmte Öffnungen (24) aufweisenden Hohlzylinders (14) gelagert ist.

6. Hydrodynamische Kupplung nach Anspruch 5, gekennzeichnet durch die folgenden Merkmale:
a) der auf der Außenseite des Hohlzylinders (14) gelagerte Ventilkörper (16) hat als Fliehgewichtskörper (23) - wie an sich bekannt - einen bezüglich der Ventilachse radialen Arm;
b) der auf der Innenseite des Hohlzylinders (14) gelagerte Ventilkörper (15) hat als Fliehgewichtskörper (27) einen an einer drehbaren Nabe (18) angeordneten und (ebenfalls bezüglich der Ventilachse) radialen Arm.

7. Hydrodynamische Kupplung nach Anspruch 6, dadurch gekennzeichnet, daß die Nabe (18) neben dem Ventilkörper (16) des einen Ventils auf der Außenseite des genannten Hohlzylinders (14) gelagert ist.

8. Hydrodynamische Kupplung nach Anspruch 6 oder 7, dadurch gekennzeichnet, daß die drehbare Nabe (18) radialkraftfrei, d.h. mit radialem Spiel, an den auf der Innenseite des Hohlzylinders gelagerten Ventilkörper (15) gekoppelt ist.

9. Hydrodynamische Kupplung nach einem der Ansprüche 1 bis 8, dadurch gekennzeichnet, daß zusätzlich zu dem genannten Kanal (9), ein Kammer-Auslaßventil (19) vorgesehen ist, das die Verzögerungskammer (8) mit dem Arbeitsraum (3) verbindet und das geschlossen ist, wenn die Primärdrehzahl größer ist als die untere Nenndrehzahl (n1), und das ansonsten geöffnet ist.

10. Hydrodynamische Kupplung nach Anspruch 9, dadurch gekennzeichnet, daß das Kammer-Auslaßventil (19), wie an sich bekannt, mittels eines gegen eine Feder wirkenden Fliehgewichtskörpers steuerbar ist.

11. Hydrodynamische Kupplung nach Anspruch 1 oder 2, dadurch gekennzeichnet, daß die Ventilanordnung wenigstens ein elektrisch steuerbares Ventil umfaßt.

## Claims

1. Hydro-dynamic clutch comprising the following features:
a) a primary impeller wheel (1) and a secondary impeller wheel (2) forming a toiroidal work space (3) which is fillable with a working fluid;
b) radially within the work space (3) is an impeller-free pressure chamber (7) which is suitable for temporarily holding working fluid and which is open towards the work space;
c) the walls of a retarding chamber (8), which is also suitable for temporarily holding working fluid and which is connected to the work space (3) via at least one channel (9) serving as a throttle, rotate with the primary impeller wheel (1);
d) the pressure chamber (7) is connected to the retarding chamber (8) via at least one valve arrangement (20) which is controllable in dependence on the primary torque;
e) **characterised in that**, for use of the hydrodynamic clutch in a combination with a motor having a bottom nominal torque (n1) and an alternatively set top nominal torque (n2) (for example pole-changeable electric motor), the valve arrangement (20) is controllable in such a manner that it is essentially only opened when the primary torque lies in a range between the nominal torques (n1, n2), and that the valve arrangement comprises a rotary slide valve.

2. Hydro-dynamic clutch according to claim 1, **characterised by** the following features:
a) the valve arrangement (20) comprises a first valve (21) and a second valve (22) positioned in front or behind the latter (relative to the flow direction);
b) the first valve (21) is shut when the primary torque is below that of the bottom nominal torque (n1), and opened when the primary torque is above it;
c) the second valve (22) is open when the primary torque is below that of the top nominal torque (n2), and shut when the primary torque is above it.

3. Hydro-dynamic clutch according to claim 1 or 2, **characterised in that** each of the valves (21, 22) of the valve arrangement (20) is in a conventional manner controlled by means of a flywheel element acting against a spring.

4. Hydro-dynamic clutch according to claim 3, **characterised in that** each of the valves comprises a rotatable valve body (15, 26) having sleeve-shaped and radially flowed-through apertures (25, 26).

5. Hydro-dynamic clutch according to claim 4, **characterised in that** the rotatable valve body (16) of the one valve is mounted on the outside of a hollow cylinder (14), which is stationary relative to the valve bodies and which also comprises radially flowed-through apertures (24), and the rotatable valve body (15) of the other valve is mounted in the inside of the latter.

6. Hydro-dynamic clutch according to claim 5, **characterised by** the following features:
a) the valve body (16) which is mounted on the outside of the hollow cylinder (14) has a conventional radial arm relative to the valve axis serving as a flywheel element (23);
b) the valve body (15) which is mounted on the inside of the hollow cylinder (14) has a radial arm, which is arranged on a rotatable hub (18) and which is also radial relative to the valve axis, serving as a flywheel element (27).

7. Hydro-dynamic clutch according to claim 6, **characterised in that** the hub (18) is mounted next to the valve body (16) of the one valve on the outside of the mentioned hollow cylinder (14).

8. Hydro-dynamic clutch according to claim 6 or 7, **characterised in that** the rotatable hub (18) is coupled free of radial load, i.e. with radial play, to the valve body (15) on the inside of the hollow cylinder.

9. Hydro-dynamic clutch according to one of claims 1 to 8, **characterised in that**, in addition to the aforementioned channel (9), a chamber outlet valve (19) is provided which connects the retarding chamber (8) to the working space (3) and which is shut when the primary torque is greater than the bottom nominal torque (n1), but otherwise open.

10. Hydro-dynamic clutch according to claim 9, **characterised in that** the chamber outlet valve (19) is in a conventional manner controlled by means of a flywheel element which acts against a spring.

11. Hydro-dynamic clutch according to claim 1 or 2, **characterised in that** the valve arrangement comprises at least one electrically controlled valve.

## Revendications

1. Accouplement hydrodynamique avec les critères suivants :
a) une roue primaire à palettes (1) et une roue secondaire à palettes (2) forment une chambre de travail (3) de forme torique remplissable par un liquide de travail ;
b) radialement à l'intérieur de la chambre de travail (3) se trouve une capacité de réserve (7) sans palette adaptée à recevoir provisoirement du liquide de travail et ouverte vers la chambre de travail,
c) avec la roue primaire à palettes (1) tournent les parois d'une chambre de décélération (8) qui sert également au stockage du liquide de travail et qui est reliée à la chambre de travail (3) par au moins un canal (9) formant un endroit d'étranglement,
d) la capacité de réserve (7) est reliée à la chambre de décélération (8) par au moins un dispositif de soupape (20) qui est commandable en fonction de la vitesse de rotation primaire,
e) caractérisé en ce que dans le but d'utiliser l'accouplement hydrodynamique en combinaison avec un moteur qui comporte une vitesse de rotation nominale inférieure (n₁) et une vitesse de rotation nominale supérieure (n₂) insérables alternativement (par exemple un moteur électrique à nombre de pôles variable) - le dispositif de soupape (20) peut être commandé de manière à n'être ouvert essentiellement que si la vitesse de rotation primaire se situe dans une zone comprise entre les deux vitesses de rotation nominales (n₁, n₂), et de façon que le dispositif de soupape comprenne une soupape à tiroir rotatif.

2. Accouplement hydrodynamique selon la revendication 1, caractérisé par les critères suivants :
a) le dispositif de soupape (20) comprend une première soupape (21) et une deuxième soupape (22) se trouvant en avant ou en arrière de la première (par rapport au sens du courant),
b) la première soupape (21) est fermée si la vitesse de rotation primaire est plus petite, et ouverte si la vitesse de rotation primaire est plus grande, que la vitesse de rotation nominale inférieure (n₁),
c) la deuxième soupape (22) est ouverte si la vitesse de rotation primaire est plus petite, et fermée, si la vitesse de rotation primaire est plus grande, que la vitesse de rotation nominale supérieure (n₂).

3. Accouplement hydrodynamique selon les revendications 1 ou 2, caractérisé en ce que chacune des soupapes (21, 22) du dispositif de soupape (20) peut être commandée d'une manière connue au moyen d'un corps de masselotte agissant contre un ressort.

4. Accouplement hydrodynamique selon la revendication 3, caractérisé en ce que chacune des soupapes comprend un corps de soupape (15, 16) pouvant tourner, en forme de manchon et ayant des ouvertures (25, 26) parcourues radialement par le flux.

5. Accouplement hydrodynamique selon la revendication 4, caractérisé en ce que le corps de soupape (16) mobile en rotation de la première soupape est monté sur la face extérieure et le corps de soupape (15) mobile en rotation de l'autre soupape sur la face intérieure, d'un cylindre creux (14) stationnaire par rapport aux corps de soupape et ayant des ouvertures (24) également parcourues radialement par le flux.

6. Accouplement hydrodynamique selon la revendication 5, caractérisé par les critères suivants :
a) le corps de soupape (16) monté sur la face extérieure du cylindre creux (14) a comme corps de masselotte (23) - comme connu en soi - un bras radial par rapport à l'axe de soupape,
b) le corps de soupape (15) monté sur la face interne du cylindre creux (14) a comme corps de masselotte (27) un bras radial (également par rapport à l'axe de soupape) disposé sur un moyeu (18) mobile en rotation.

7. Accouplement hydrodynamique selon la revendication 6, caractérisé en ce que le moyeu (18) est monté à côté du corps de soupape (16) d'une soupape sur la face extérieure du cylindre creux indiqué.

8. Accouplement hydrodynamique selon les revendications 6 ou 7, caractérisé en ce que le moyeu (18) mobile en rotation est accouplé sans effort radial, c'est-à-dire avec du jeu radial, sur le corps de soupape (15) monté sur la face intérieure du cylindre creux.

9. Accouplement hydrodynamique selon l'une des revendications 1 à 8, caractérisé en ce qu'en plus du canal (9) indiqué, est prévue une soupape de sortie de chambre (19) qui relie la chambre de décélération (8) à la chambre de travail (8), soupape qui est fermée lorsque la vitesse de rotation primaire est plus grande que la vitesse de rotation nominale inférieure (n₁), et qui sinon est ouverte.

10. Accouplement hydrodynamique selon la revendication 9, caractérisé en ce que la soupape de sortie de chambre (19), comme cela est connu en soi, peut être commandée au moyen d'un corps de masselotte agissant contre un ressort.

11. Accouplement hydrodynamique selon les revendications 1 ou 2, caractérisé en ce que le dispositif de soupape comprend au moins une soupape commandable électriquement.
